(19) Europäisches Patentamt
European Patent Office
Office européen des brevets

(11) **EP 2 789 674 A1**

(12) **EUROPEAN PATENT APPLICATION**

(43) Date of publication:
**15.10.2014 Bulletin 2014/42**

(51) Int Cl.:
*C10G 15/08* (2006.01)   *B01F 7/00* (2006.01)
*B01J 19/10* (2006.01)   *B06B 1/00* (2006.01)

(21) Application number: **13199924.5**

(22) Date of filing: **31.12.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.04.2013 UA 2013004638 U**

(71) Applicant: **Oil Tech OÜ
11415 Tallinn (EE)**

(72) Inventor: **Voitovych, Oleksandr
08200 Irpin (UA)**

(74) Representative: **Nelsas, Tónu
AAA Patendibüroo OÜ
Tartu mnt, 16
10117 Tallinn (EE)**

(54) **Device for ultrasonic cracking of hydrocarbon compounds**

(57)   The claimed device designed for ultrasonic cracking of hydrocarbon compounds (raw hydrocarbons). The device contains an input system, system for running a cavitation process in introduced raw materials, system for extracting the products of processing, system of technical parameter control. The main part of the input-reactor system is constructed with the possibility to organize a cavitation process in raw hydrocarbons, the acoustic ultrasonic radiators are placed in the cavity of the reactor, vertical mixer (rotary mixer) for providing hydrodynamics of pseudo-liquefied vortex layer of the catalysts inside the reactor, the device for supplying raw hydrocarbons to the reaction zone, the device for mixing raw hydrocarbons and gaseous and liquid admixtures, intermediate vessel and device for selection and extraction of target product, rectifying column, system for controlling, stabilizing and registering thermodynamic parameters of processes occurring in the reactor. The device is additionally equipped with a catalyst placed in the container constructed as a basket with the perforated upper and lower bottom and placed in the reactor in the zone of a developed cavitation flow (stream) of the mixture consisting of raw hydrocarbons, gaseous-liquid admixtures and vortex pseudo-liquid layer of the catalyst, including the device for changing (regulating) rotation speed of the mixer (rotary mixer) installed in the lower part of the reactor of the device, device for supplying hydrogen-bearing substance and mixing them with raw hydrocarbons. The casing of the reactor is built out of non-magnetic steel with the possibility to vertically install the prolonged cylinder (H>D) and is equipped two end covers installed in the casing of the reactor with the possibility to provide vacuum density (air tightness) with the upper end cover having holes for installing acoustic ultrasonic radiators in them and the lower one having holes for installing devices intended for supplying raw hydrocarbons, hydrogen-bearing substances to devices where they undergo mixture process.

The vessel for the catalyst is located in the upper part of the reactor of the device and is built with perforation holes in the upper and lower bottom. As a catalyst one uses a substance chosen from granules of intermetallic mixture that includes particles of nickel, palladium, platinum, corundum, silica and particles of other metals and oxides possessing higher chemisorptive traits. Installation provides the increase of efficiency thanks to tying (stabilization) of free hydrocarbon radicals generated during cracking and, thus, preventing recombination of initial recombination of raw hydrocarbons. The performance of the device provides information on structural parametric identification of mathematic model used for defining optimum modes for processing raw hydrocarbons.

FIG. 4

EP 2 789 674 A1

**Description**

This utility model is related to devices and equipment for transforming energy contained in steam-gas-liquid raw hydrocarbons including an acoustic cavitation field that appears in the space of elastic waves scattered in the processed raw materials for the purpose of low-temperature disintegration, cracking and homogenization of hydrocarbon compounds (raw hydrocarbons).

This mechanism for dispersing energy in liquid raw hydrocarbons while they are subjected to ultrasonic processing is an epithermal one and implements processes in these raw hydrocarbons, which are common to high-energy physics and chemistry and are accompanied with the occurrence of thermodynamically non-equilibrium conditions. This allows accumulating a certain amount of energy the in water (and in raw hydrocarbons accordingly) by means of isothermal destruction of their inner structure formed by hydrogen bonds that separate molecules create among themselves and as a result, release this energy as hydration heat either through the relaxation of the non-equilibrium condition or through combining the water (raw hydrocarbons) with other substances.

The claimed utility model can be applied in the petrochemical, chemical, food, pharmaceutical and perfume industries, including medicine and energetics.

A device for the ultrasonic cracking of hydrocarbon compounds exists that consists of a reactor constructed with the possibility of creating a cavitation process in raw hydrocarbons, acoustic ultrasonic radiators in the cavity of the reactor, a vertical mixer (rotary mixer) for providing hydrodynamics of pseudo-liquefied layer of the flow inside the reactor, a device for supplying raw hydrocarbons to the reaction zone, and a device for selection and extraction of target product, - see S. D. Shestakov. Cavitation reactor. - In patent RU № 2078112 and international publication WO 2007/1120067 A1, BO1Y 19/10, B01F 11/02, 25.10.2007 [1].

The existing device allows processing liquid environments with the help of an acoustic (ultrasonic) field and presents an opportunity to extract an additional quantity of light-coloured, light crude oil products from the oil through the generation of elastic cavitation waves that create separate cavitation bubbles, and to use such bubbles for the processing of raw hydrocarbons, which causes a break of the bonds of molecules of raw hydrocarbons and formation lighter and lighter molecules.

The existing device provides a technical result of increasing the density of potential energy of a cavitator by having this energy redistributed within the volume of the cavitation reactor while the volume of this reactor remains unchanged regardless of static pressure inside the reactor and without a corresponding change of volumetric density of acoustic power of harmonic vibrations that cause the cavitation.

Nevertheless, the efficiency of the existing device is relatively inadequate. The primary cause for this is that the existing device does not prevent the recombination of free (unsaturated) radicals that appear during acoustic processing of raw hydrocarbons into a long hydrocarbon molecule, which results in substantial decrease of light fractions in the target product.

Another device for the ultrasonic cracking of hydrocarbon compounds exists that consists of a casing that permist creating a cavitation process in raw hydrocarbons, acoustic ultrasonic radiators in the cavity of the reactor (reactor), a vertical mixer (rotary mixer) for providing hydrodynamics of pseudo-liquefied layer of the flow inside the reactor, a device for supplying raw hydrocarbons to the reaction zone, and a device for the selection and extraction of target product, - see R. N. Kamalov. Method for cracking organic compounds in liquid and gaseous environments and the device for its execution. - In the patent RU № 215116, 2151165, C10G 15/02, B01Y 19/10, B01 19/10, 22.03.1999 [2].

The above device permits ultrasonic cracking of raw hydrocarbons but retains the abovementioned drawback, resulting in relative lack of efficiency because the device does not present a possibility to prevent recombination of free radicals appearing due to ultrasonic processing of raw hydrocarbons and repeated generation of long molecules of organic compounds.

Another device for the ultrasonic cracking of hydrocarbon compounds exists that consists of a casing built with the possibility to run a cavitation process in raw hydrocarbons, acoustic ultrasonic radiators in the cavity of the reactor (reactor), a vertical mixer (rotary mixer) for providing hydrodynamics of pseudo-liquefied layer of the flow inside the reactor, a device for supplying raw hydrocarbons to the reaction zone and a device for selection and extraction of target product from the reactor - see R. E. Rodionov, E. F. Venger. A device for cracking oil and oil products. -Ukrainian patent UA № 41576, C10G 15/00, 26.07.2000 [3].

The above device also provides raw hydrocarbon ultrasonic cracking, but retains the indicated drawback. That is why its efficiency is also relatively low, as the existing device also does not present a possibility to prevent the recombination of free radicals generated due to ultrasonic processing of raw hydrocarbons and repeated generation of long molecules of organic compounds.

The closest to the declared utility model, judged by its technical nature and the achieved result, is another existing device for ultrasonic cracking of hydrocarbon compounds chosen as a prototype and consisting of a casing built with the possibility to run a cavitation process in raw hydrocarbons, acoustic ultrasonic radiators in the cavity of the reactor (reactor), a vertical mixer (rotary mixer) for providing hydrodynamics of the flow inside the reactor, a device for supplying raw hydrocarbons to the reaction zone, and a device for selection and extraction of the target product, - see Harald Berger et al. Reactor for performing chemical reactions. -US patent № 5,484,573, 16.01.1996, B06B 1/00, C08F 3/00, B01F 11/00 (PROTOTYPE) [4].

Thanks to its structure and design, the existing device provides relatively higher efficiency due to ensuring a reaction of standing waves with antinodes in the central column of mixture of raw hydrocarbons and hydrocarbon-bearing admixtures, which leads to the increase of target product output.

The main drawback mentioned above, namely insufficient efficiency due to impossibility to prevent the recombination of free radicals generated during ultrasonic processing of hydrocarbon-bearing raw materials, remains because of the impossibility (complication) to provide optimum conditions required in order to transfer to a molecule of raw hydrocarbons to be cracked the amount of energy (potential and kinetic) necessary for cracking, because the temperature and pressure in a cavitation bubble are of inordinate values that change rapidly. This leads to a very chaotic breaking of Van der Waal's bonds in long molecules of processed raw hydrocarbons and appearance of lighter radicals with the molecular mass approximately equal to the half of mass of the primary molecule.

The newly formed lighter and free radicals possess substantial energy generated as a result of primary molecules of the raw materials undergoing ultrasonic processing. Their bonds are not filled but open and are located close to one another (at least initially). So if they are not tied together in the shortest possible time, then sooner or later they will recombine with one another and form a primary long molecule of hydrocarbon-bearing raw materials.

The goal of this utility model is to increase the efficiency of the existing raw hydrocarbon ultrasonic processing device by means of preventing (decreasing) the recombination of light free radicals generated as a result of cavitation.

The presented task is solved according to the declared utility model by adding to the existing device for ultrasonic cracking of raw hydrocarbon compounds, chosen as a prototype and consisting of a casing built with the possibility to run a cavitation process in raw hydrocarbons, acoustic ultrasonic radiators in the cavity of the reactor (reactor), a vertical mixer (rotary mixer) for providing hydrodynamics of the flow of raw hydrocarbons inside the reactor, a device for supplying raw hydrocarbons to the reaction zone, and device for selection and extraction of target product, , an additional catalyst placed in a container located in upper part of the reactor in the zone of a cavitation flow (stream) in the pseudo-liquid layer of the catalyst, and also devices for changing (regulating) the rotation speed of the mixer (rotary mixer) installed in the lower part of the reactor, devices for supplying hydrogen-bearing substances and their mixing together with raw hydrocarbons. With this taken into consideration, the casing is constructed as a vertical prolonged cylinder whose height exceeds its diameter (H>D), and has two end covers installed (in the casing) with the possibility of providing vacuum density (air tightness), while the upper end cover has holes intended for installing (in them) the acoustic ultrasonic radiators and the lower end cover - for installation of the devices responsible for supply of raw hydrocarbons, hydrogen-bearing substances and their mixing.

Aside from that, the presented task is solved by having the perforated container for the catalyst constructed in the form of a basket with perforation holes and placed in the upper part of the reactor, and the substance used as the catalyst is chosen from granules formed from the intermetallic mixture that includes particles of nickel, palladium, platinum and other metals possessing higher chemisorptive traits, combinations of them.

The task is solved by having the granules of the catalyst to be of typical sizes 160-200 $\mu$m, and the basket for the catalyst with perforation holes having typical sizes 120-160 $\mu$m. With that taken into consideration, the basket has the shape of a cylinder with the side walls of the reactor as its own side walls and 2 (two) mesh filters as the upper and lower bases with perforation holes of typical size 120-160 $\mu$m, and these filters are attached with their side surfaces (ribs) to the side walls of the reactor.

The presented task is solved by the casing being built from a non-magnetic metal chosen from non-magnetic stainless and acid-resistant steel, aluminum, chrome, nickel, copper and titanium alloys and special duralumin kinds.

Aside from that, the presented task is solved by having the acoustic ultrasonic radiators constructed as piezoelectric, magnetostrictive, piezostrictive radiators with the possibility to create a vertically directed standing acoustic field with frequency-energetic characteristics that ensure the generation of a cavitation flow (stream) in the pseudo-liquefied layer of the catalyst and raw materials mixed together with a granulated catalyst and gaseous-liquefied hydrogen-bearing admixtures with the possibility to obtain from them (or on their basis) (at least for a short while) the atomic hydrogen or hydride ions for binding (stabilizing) the free radicals generated during cracking, and thus preventing the recombination of molecules of processed raw materials, which leads to prevention of uncontrollable destruction of the molecule of raw materials during cracking.

The presented task is solved through application of hydrogen-bearing substance chosen from molecular hydrogen ($H_2$), gases of methane line (methane ($CH_4$), ethane ($C_2H_6$), propane ($C_3H_8$), butane ($C_4H_{10}$) and other hydrogen gases, liquids and dissolved solids that contain hydrocarbons.

Aside from that, the presented task is solved by having the acoustic ultrasonic radiators installed in the casing with the possibility of axial pistonwise transportation while ensuring the vacuum density (air tightness) of the inner space of the reactor.

The part in the claimed device responsible for supplying raw hydrocarbons is constructed as a pump with an electric engine, has a filter, reverse valve, and the device for supplying hydrogen-bearing substance is constructed as a gas flow rate meter, has a reverse valve, channel for supply of hydrogen-bearing gases, whereas the device intended for mixing raw hydrocarbons with hydrogen-bearing substance is constructed as a diffuser.

Aside from that, the presented task is solved by having the device intended for changing (controlling) the rotation speed of the vertical mixer (rotary mixer) constructed as a frequency converter with the possibility to change the rotation speed in such a way that ensures the change of level of mixture between raw hydrocarbons and hydrogen-bearing admixture from the lower to the upper level of the cavitation zone in the flow (stream) of the pseudo-liquefied catalyst.

The part in the claimed device intended for the selection and extraction of target product is constructed as a sectioned rectification column the entrance of which is connected to a drain tube of the intermediate vessel of the device while the column has at least three sections and evaporation of processed raw hydrocarbons in the column is performed (provided) by means of SHF-generator installed in the lower part of the column.

Aside from that, the presented task is solved by having the claimed device (reactor) additionally equipped with heaters of raw hydrocarbons placed (installed) in the casing of the intermediate vessel.

Finally, the presented task is solved by having the claimed device (its reactor) additionally supplied (equipped) with two mesh filters installed the following way: the first one - in the upper part of the reactor between the basket with a catalyst and acoustic ultrasonic radiators, the second one - in the lower part of the reactor between the entrance to the reactor and its central part with the possibility to prevent pollution of the catalyst (in the container).

Such execution of the utility model ensures a substantial increase of the efficiency of the claimed device by means of stabilization and prevention of recombination of free radicals and also through creating and using the nuclear trait of gaseous admixtures, additionally equipped (provided) with a catalyst placed in a container in the upper part of the reactor in the zone of a cavitation flow (stream) in the pseudo-liquefied layer of the catalyst, and also with the devices for changing (controlling) rotation speed of the vertical mixer (rotary mixer) installed in the lower part of the reactor, devices for supplying hydrogen-bearing substances and mixing them with raw hydrocarbons, while the casing has the shape of a vertically placed prolonged cylinder whose height exceeds its diameter (H>D) and who is equipped with two end covers installed (in the casing) with the possibility of providing vacuum density (air tightness), while the upper end cover has holes for installing (in them) the acoustic ultrasonic radiators and the lower end cover - the holes for installing the devices responsible for supply of raw hydrocarbons, hydrogen-bearing substances and their mixing.

The fact that the claimed device (its reactor) is additionally equipped (provided) specifically with the granulated catalyst placed in the container in the upper part of the reactor in the zone of the cavitation flow (stream) in the pseudo-liquefied layer, and also with the devices for changing (controlling) rotation speed of the vertical mixer (rotary mixer) installed in the lower part of the reactor, devices for supplying hydrogen-bearing substances and mixing them with raw hydrocarbons, while the casing has the shape of a vertically placed prolonged cylinder whose height exceeds its diameter (H>D) and who is equipped with two end covers installed (in the casing) with the possibility of providing vacuum density (air tightness), while the upper end cover has holes for installing (in them) the acoustic ultrasonic radiators and the lower end cover - the hole for installing the devices responsible for supply of raw hydrocarbons, hydrogen-bearing substances and their mixing, ensures a substantial increase of its efficiency thanks to more effective execution of cracking reaction in the presence of the catalyst.

This is also encouraged by the perforated container being made as a basket with perforation holes and placed in the upper part of the reactor, and the substance used as a catalyst is chosen from granules formed from an intermetallic mixture that includes particles of nickel, palladium, platinum and other metals possessing higher chemisorptive traits, their combinations.

Aside from that, such application of the granulated catalyst in the claimed device ensures the increase of its efficiency by means of providing a possibility, at least for a short while, to receive atomic hydrogen with increased chemical activity from the processed mixture of raw materials and admixtures.

The same thing is encouraged by the fact that the granules of the catalyst are of the typical size 160-200 $\mu$m, and the basket for the catalyst - with perforation holes having the typical sizes 120-160 $\mu$m, while the basket itself has the shape of a parallelepiped, the side walls of which are the side walls of the reactor, and at least 2 (two) mesh filters serving as the upper and lower bases that have the perforation holes with the typical size 120-160 $\mu$m, and these filters are attached with their side surfaces (ribs) to the side walls of the reactor.

Such design of the claimed device provides the chemisorption of molecules of the mixture of raw materials and water-bearing admixtures that undergoes the procession by an acoustic field on the surface of granules the catalyst, where generation of HM, $H_2M$ and $H_3M$ metal hydrides takes place. Hydrogen bonds in hydride molecules are very weak energetically. That is why very soon these molecules dissociate ions of $H^+$ and metals.

The ions of atomic hydrogen possess very high chemical activity and actively saturate the open bonds of light radicals received through cracking of the processed mixture, so this way they prevent recombination of free (unsaturated) radicals received through acoustic processing of raw hydrocarbons into a long hydrocarbon molecule, which results in a substantial increase of light fractions in the target product, which, in turn, rises the efficiency of the claimed device.

The fact that the casing of the claimed device is built from non-magnetic metal, namely from non-magnetic stainless and acid-resistant steel, aluminium, chrome, nickel, copper and titanium alloys and from special kinds of duralumin, ensures inadhesion of granules of the catalyst to the walls of the reactor, thus increasing the performance efficiency of the catalyst with the whole surface, which promotes the increase of performance of the device.

The increase of efficiency of the claimed device is promoted by the acoustic ultrasonic radiators being built as piezoelectric, magnetostrictive, piezostrictive radiators with the possibility of creating a vertically directed standing acoustic field with frequency-energetic characteristics that ensure the generation of the cavitation flow (stream) of raw hydrocarbons in the pseudo- liquefied layer of the catalyst and gaseous-liquefied hydrogen-bearing admixtures with the possibility to receive from them (or on its basis) (at least for a short while) the atomic hydrogen or hydride ions for binding (stabilizing) the free radicals generated during cracking, and thus preventing the recombination of molecules of processed raw materials, which leads to prevention of uncontrollable destruction of the molecule of raw materials during cracking.

The fact that the acoustic ultrasonic radiators installed in the casing of the claimed device possess the possibility of axial pistonwise transportation while providing vacuum density (air tightness) of the inner space of the reactor insures the increase of efficiency by creating the mode of more effective physiochemical processing of raw hydrocarbons.

This is promoted by the fact that the deivice for supplying raw hydrocarbons in the claimed device is built as a controllable pump equipped with an electric engine, frequency converter, a reverse valve and with the device for supplying hydrogen-bearing substance constructed as a gas flow rate meter. The device intended for mixing raw hydrocarbons with hydrogen-bearing substances is constructed as a diffuser, whereas the device for measuring (regulating) rotation speed of the vertical mixer (rotary mixer) is built as a frequency converter of the mixer engine with the possibility to change the rotation speed in such a way that provides the change of expenditure of mixture between raw hydrocarbons and water-bearing admixture from the lower to the upper level of the cavitation zone in the flow (stream) of pseudo-liquefied layer of the catalyst.

The fact that the part in the claimed device intended for selection and extraction of target product is constructed as a sectioned rectification column the entrance of which is connected to a drain tube of the intermediate vessel of the device while the column has at least three sections and evaporation of processed raw hydrocarbons in the column is performed (provided) by means of SHF-generator installed in the lower part of the column, ensures the increase of efficiency of the device through timely and correct selection of the target product.

The fact that the intermediate vessel of the claimed device is additionally equipped with raw hydrocarbon heaters located in the heat-insulated casing ensures the increase of efficiency of the device through the possibility to optimize thermodynamic conditions of cracking process.

The fact that the claimed device is additionally supplied (equipped) with two mesh filters installed the following way: the first one - in the upper part of the reactor between the basket with a catalyst and acoustic ultrasonic radiators, the second one - in the lower part of the reactor between the entrance to the reactor and its central part with the possibility to prevent pollution of the catalyst (in the container), provides the increase of efficiency of the device through optimization of conditions for using the granulated catalyst.

From now on the illustration of the claimed device shall be continued by reviewing the figures of blueprints that schematically depict:

Fig. 1 - flow chart of the device.
Fig. 2 - algorithm for carrying out a research using the device;
Fig. 3 - the reactor of the device for ultrasonic cracking of hydrocarbon compounds, frontal view, cross section;
Fig. 4 - technological layout of functioning of the device:
Fig. 5 - a photo of the façade of the device:

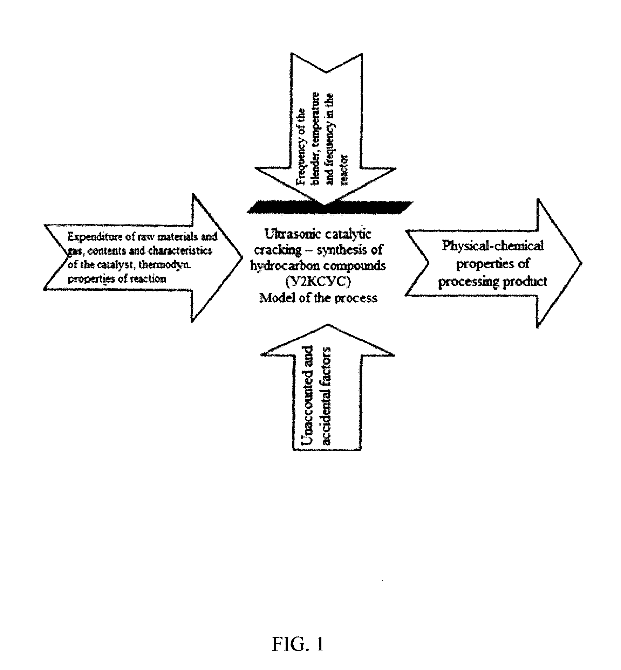

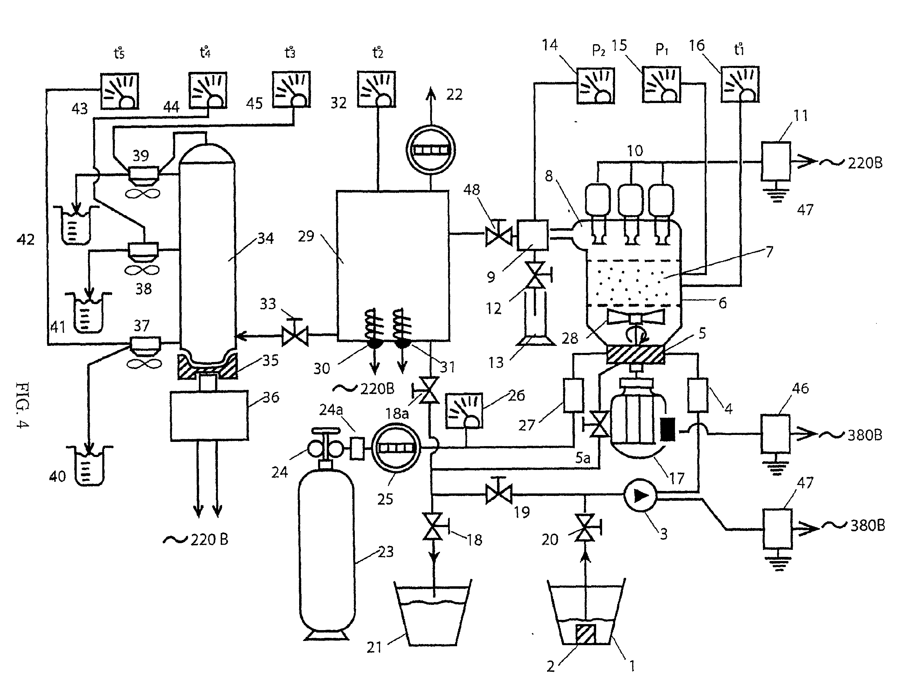

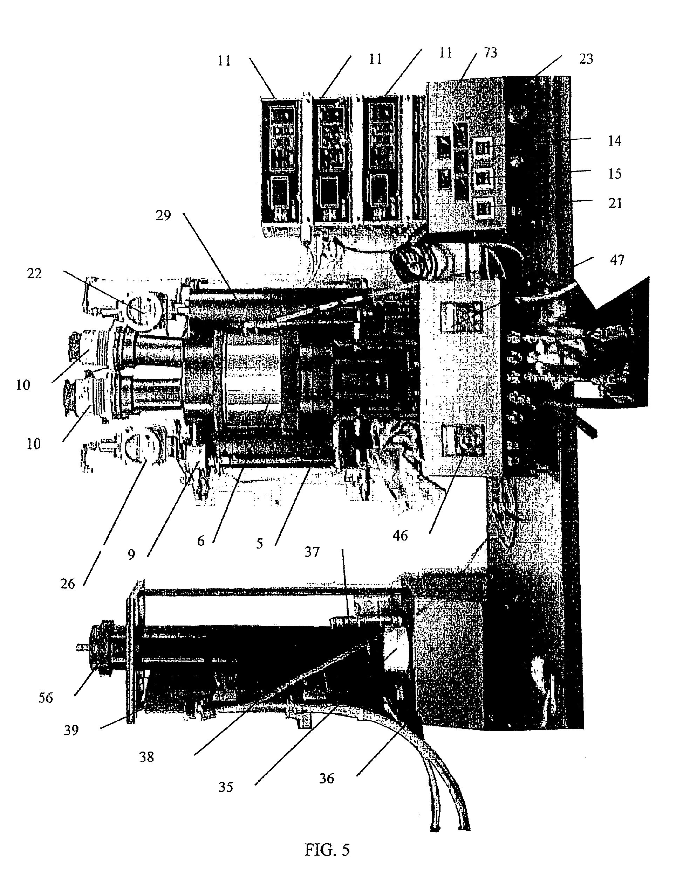

The work of the claimed device is illustrated by the list of figures (Fig. 1-5)

The Fig. 1 depicts the flowchart of execution, structural and parametric identification of mathematical model of ultrasonic catalytic cracking- hydrocarbon compound synthesis used as a basis for performing laboratory and experimental researches with the help of the claimed device. For the specific type of raw hydrocarbons, depending on the purpose one determines the succession of operations that lead to gaining of optimum modes for functioning of the device. The type of raw hydrocarbons is chosen from the following: heating oil, cracking - the leftovers of petroleum-refining production, pyrolysis oil, stove oil, oil, oils, stable gaseous condensate water, diesel fuel and fuel. The purpose of the search and discovery of optimum petroleum-refining modes, while using the indicated technology, lies in finding such parameters of input valuables that are able to minimize divergences between the output parameters of this technology and its best parameters defined through a mathematic model of the technological process implemented by the device. In order to conduct a study to discover the modes able to optimize the technology of ultrasonic catalytic cracking - synthesis of hydrocarbon compounds, it is necessary to carry out a variety of procedures. The goal is expressed either as increasing the output of distillate fractions (increase of feedstock refinery depth), as decreasing the amount of sulphur in fuel or as improving the specific physico-chemical characteristics of hydrocarbons. Since the reactor block of oil-refining devices is not a completely studied object of control, the definiton of specified procedures is carried out depending on the goal for solving the task of refining the specific raw hydorcarbons with specific admixtures, in the specific thermodymanic conditions and with the correct choise of a catalyst. At this stage the chosen equation solution method is the one that describes the dynamics of the system. The model of the system is represented by equations of perservance, nonseparability, equations of cinetics and chemical thermodynamics and many other correlations.

Since the reactor block of oil-refining plants is not a completely studied object of control, see: Ljung L., System identification. Theory for the User, 2-nd edition - N. J.: PTR Prentice Hall, 1990, the goal of solving the general task of structural and parametrical identification of a transfer function of the processes occuring inside the reactor is dealt with by methods of planing the experiments, see: Yudin D. B. Mathematical methods of control in conditions of insufficient information. M. Sov. radio, 1974. p. 400.

Such a form of identification of the transfer function explains the approaches to solving the given task. Also one knows the input and output parameters of the system and regulating influences, which is why the identification of the transfer function shall be performed by using methods of structural and parametrical identification of management theory, see: Eykhoff, Pieter: System Identification - Parameter and System Estimation, john Wiley & Sons, New York, 1974. ISBN 0-471-24980-7., Sage Zh. P., White Ch. S. Optimum system management. M: Radio and communications, 1982, p. 392, see also Wimpenny, J. W. T. (1997) "The Validity of Models", Adv Dent Res, 11 (1): 150-159. The vector of output characteristics W, during transition modes, when the throws of output parameters are likely and when non-linearity of the system is excluded, is traditionally identified as $W=Y(P) / X(P)$; this, of course, is performed while knowing initial, borderline and closing relations. But since the system is inert, the transfer function W of the system is an integro-differential of functional equation system. In practice such a structural identification is very difficult to perform due to number of conditions and mostly because currently there is no known way of solving this task. Nevertheless, in stationary conditions the interrelation between input and output parameters may be identified as functions.

For that, in accordance with the flowchart depicted in fig. 1, one accepts initial and borderline conditions for performance of the device and setting presets for work mode of the system to which the technology and conditions of carrying out of experimental works are related to. Fig. 1 represents the flowchart for solving the task of petroleum-refining. Let us move in accordance with it to the simplified visualization of this task, for example, as multidimensional functional dependence of output parameters from the input ones. To do so, for the output parameters of the system (response) we shall use the following:

- The depth of oil-refining is an output of light, distillate fractions ($\eta$) when performing fractional distillation of processed oil product by atmospheric distillation machine, for example APHC-1M;
- The amount of sulphur and sulphur-bearing compounds contained in output products (S) that went through cavitation processing in presence of catalysts and gaseous admixtures;
- The amount of selected fuel fractions (up to the temperature of 205 °C) ($\eta_{205}$);
- The amount of selected diesel-fuel fractions (from the temperature of 235 °C until the end of boiling in the distillation machine) ($\eta_{235}$).

For the input parameters thereinafter - factors in this task, we shall use the following:

- Types of raw materials. First of all it is the heating oil M100. It would be just as promising to use other type of hydrocarbons. These can be cracking leftovers, oils of many oil deposits, fissile pyrolysis oil, and stabilized condensate. Commercial engine fuels that must be "enriched". These include motor fuels, diesel-fuels and other commercial fuels.
- Volume of raw material expenditure set by a frequency converter ($Q_c$);
- Type of hydrogen-bearing admixture ($\Gamma$);
- Expenditure of hydrogen-bearing gaseous admixture, which is regulated with regulation devices ($Q_{H2}$)
- Rotation frequency of the mixer (blender) regulated with the frequency converter $(f_6)$
- Type of the catalyst (K);
- Power of the acoustic system (N);
- Temperature in the cavity of the reactor (T);
- Excessive pressure in the cavity of the reactor (P);

Dependencies between the output and input parameters in this system gained after performing the experimental researches can be depicted as follows:

$$\vec{\Pi} = \left\{ Q_c, Q_{H_2}, \Gamma, f_6, K, N, T, P \right\}, \qquad (1)$$

$$\vec{Y} = \left\{ \eta, S, \eta_{205}, \eta_{2356}, \rho, \mu, \Delta E \right\} \qquad (2)$$

$$\eta = f\left( Q_c, Q_{H_2}, \Gamma, f_6, K, N, T, P \right), \qquad (3)$$

$$S = \varphi\left( Q_c, Q_{H_2}, \Gamma, f_6, K, N, T, P \right), \qquad (4)$$

$$\eta_{205} = f_1\left( Q_c, Q_{H_2}, \Gamma, f_6, K, N, T, P \right), \qquad (5)$$

$$\eta_{235} = f_2\left( Q_c, Q_{H_2}, \Gamma, f_6, K, N, T, P \right), \qquad (6)$$

where $\overline{\Pi}$ - vector of input variables, $\overline{Y}$ - system response, $Q_cQ_{H2}$ - expenditure of raw materials, 1/min. expenditure of gas, 1/min. $\Gamma$ - type of gas admixture, $f_6$, - rotation frequency of the blender, Hz, C - type of the catalyst, N - power of the acoustic system, kWh, T - temperature of the walls of the reactor, °C, P - value of excessive pressure in the reactor, mPa. When commencing the cycle of experiments each of the components of an input variable vector is changed on some levels. There exist real conditions of conducting experiments based on which the identification of the zone of optimum component values of the task is carried out by methods for experiment planning. As demonstrated by the experience of solving oil-refinement tasks performed by the laboratory during previous period, the size of the system described in equations (3) - (6) can be significantly decreased.

This way in place of the catalyst we use two inter-metallic powders and hydrogen-bearing admixture as one of two previously squeezed gases. The rest of components of input variable vector shall also be changed on two levels. This is achieved by constructing the table of variables for input parameters of experiments.

Table 1

| N p/p | $Q_c$ | $Q_z$ | $\Gamma$ | $f_6$ | $K$ | $N$ | $T$ | $P$ |
|---|---|---|---|---|---|---|---|---|
| | $Q_{cmin}$ | $Q_{zmin}$ | $\Gamma_1$ | $f_{6min}$ | $K_1$ | $N_{min}$ | $T_1$ | $P_{min}$ |
| | $Q_{cmax}$ | $Q_{zmax}$ | $\Gamma_2$ | $f_{6max}$ | $K_2$ | $N_{max}$ | $T_2$ | $P_{max}$ |

This table is used as basis for constructing the table of experiments tab. 2

Table 2

| N p/p | $Q_c$ | $Q_z$ | $\Gamma$ | $f_6$ | $K$ | $N$ | $T$ | $P$ |
|---|---|---|---|---|---|---|---|---|
| 1 | $Q_{cmin}$ | $Q_{z\,min}$ | $\Gamma_1$ | $f_{6min}$ | $K_1$ | $N_{min}$ | $T_1$ | $P_{min}$ |
| 2 | $Q_{cmax}$ | | $\Gamma_1$ | $f_{6min}$ | $K_2$ | $N_{min}$ | $T_1$ | $P_{min}$ |
| 3 | $Q_{cmin}$ | $Q_{z\,min}$ | $\Gamma_2$ | $f_{6max}$ | $K_1$ | $N_{max}$ | $T_2$ | $P_{max}$ |
| 4 | $Q_{cmin}$ | $Q_{z\,max}$ | $\Gamma_1$ | $f_{6min}$ | $K_2$ | $N_{min}$ | $T_1$ | $P_{min}$ |
| 5 | $Q_{cmax}$ | $Q_{z\,min}$ | $\Gamma_2$ | $f_{6max}$ | $K_1$ | $N_{max}$ | $T_2$ | $P_{max}$ |
| 6 | $Q_{cmin}$ | $Q_{z\,max}$ | $\Gamma_1$ | $f_{6min}$ | $K_2$ | $N_{min}$ | $T_1$ | $P_{min}$ |
| 7 | $Q_{cmax}$ | $Q_{zmin}$ | $\Gamma_2$ | $f_{6max}$ | $K_1$ | $N_{max}$ | $T_2$ | $P_{max}$ |
| 8 | $Q_{cmin}$ | $Q_{zmax}$ | $\Gamma_1$ | $f_{6min}$ | $K_2$ | $N_{min}$ | $T_1$ | $P_{min}$ |
| 9 | $Q_{cmax}$ | $Q_{zmin}$ | $\Gamma_2$ | $f_{6max}$ | $K_1$ | $N_{max}$ | $T_2$ | $P_{max}$ |
| 10 | $Q_{cmin}$ | $Q_{zmax}$ | $\Gamma_1$ | $f_{6min}$ | $K_2$ | $N_{min}$ | $T_1$ | $P_{min}$ |

(continued)

| N p/p | $Q_c$ | $Q_z$ | $\Gamma$ | $f_6$ | $K$ | $N$ | $T$ | $P$ |
|---|---|---|---|---|---|---|---|---|
| 11 | $Q_{cmax}$ | $Q_{zmin}$ | $\Gamma_2$ | $f_{6max}$ | $K_1$ | $N_{max}$ | $T_2$ | $P_{max}$ |
| 12 | $Q_{cmin}$ | $Q_{zmax}$ | $\Gamma_1$ | $f_{6min}$ | $K_2$ | $N_{min}$ | $T_1$ | $P_{min}$ |
| 13 | $Q_{cmax}$ | $Q_{zmin}$ | $\Gamma_2$ | $f_{6mmax}$ | $K_1$ | $N_{max}$ | $T_2$ | $P_{max}$ |
| 14 | $Q_{cmin}$ | $Q_{zmax}$ | $\Gamma_1$ | $f_{6min}$ | $K_2$ | $N_{min}$ | $T_1$ | $P_{min}$ |
| ... | ... | ... | ... | ... | ... | ... | ... | ... |
| 196 | $Q_{cmax}$ | $Q_{zmax}$ | $\Gamma_2$ | $f_{6max}$ | $K_2$ | $N_{max}$ | $T_2$ | $P_{max}$ |

In the table of changes of input parameters (Tab. 2), the number of lines must correspond to the number of defined coefficients of the model. One conducts the experiments on the basis of values of input variables-factors. Then one registers the results and simultaneously with this table enters the data into the table with the experiment results.

The table storing the experiment data has the same number of lines. It is the prototype of the table for planned experiments. After analytical tests of each sample one enters the data of the gained results into the table. Table 3 is constructed not only from the listed values of $\eta$, S, $N_{205}$, $\eta_{235}$, but also has other results added to it, such as viscosity $\mu$, density $\rho$ and specific energy $\Delta E$ for each experiment.

| N p/p | $\eta$ | $S$ | $\eta_{205}$ | $\eta_{235}$ | $\mu$ | $\rho$ | $\Delta E$ |
|---|---|---|---|---|---|---|---|
| 1 | $\eta_1$ | $S_1$ | ... | ... | ... | $\rho_1$ | $\Delta E_1$ |
| 2 | $\eta_2$ | $S_2$ | ... | ... | ... | $\rho_2$ | $\Delta E_2$ |
| 3 | $\eta_3$ | $S_3$ | ... | ... | ... | $\rho_3$ | $\Delta E_3$ |
| 4 | $\eta_4$ | $S_4$ | ... | ... | ... | $\rho_4$ | $\Delta E_4$ |
| 5 | $\eta_5$ | $S_5$ | ... | ... | ... | $\rho_5$ | $\Delta E_5$ |
| ... | ... | ... | ... | ... | ... | ... | ... |
| 196 | $\eta_{196}$ | $S_{196}$ | $\eta_{205}$ | $\eta_{235}$ | $\mu$ | $\rho_{196}$ | $\Delta E_{196}$ |

The construction of Tab. 3 as continuation inevitably raises many questions regarding the type of the function that models the influence of factors on n, which raises the necessity to make reasonable assumptions about the essence of functions and its parameters. It is accepted that functions for modelling the process (3) - (6) are set as a degree polynomial, which is a sign of structural identification. The discovery of coefficients polynomials by solving systems of linear algebraic variables generated on the basis of table 3 - such is the stage of parametric identification of process models.

Concerning the methodology of planning optimum experiment, see: Kiefer I. Optimum experimental designs with applications to systematic and rotatable designs - In: Proc. 4-th Berkeley Symp. Mathematical Statistic and Probability, 1961, p 381-398, Adler Y. P., Markova V. V. Planning of experiment while looking for optimum conditions. - M.: nedra, 1976. - p. 280, Gulayev V. V., M. H., Suhanow Y. N. Adaptive algorithm for searching optimum parameters of complicated systems. - In the book: V Multiun. Meetings on management (Moscow, 1971). Ref. rep. M., 1971, part 2, p. 1332 -134. Krasovskiy G. I., Filaretov G. F. Planning of the experiment. - Minsk: BSU, 1982. - p. 302, Heartman K., Leckiy E., Shefer V. Planning of the experiment in researching of technological processes - M.: Mir, 1977. P. 552, Hicks Ch. R., Basic principles of planning the experiment, translation from English, M., 1967 and GOST 8.207-76 demonstrate that the number of experiments can be sufficiently decreased by using several probability "tricks".

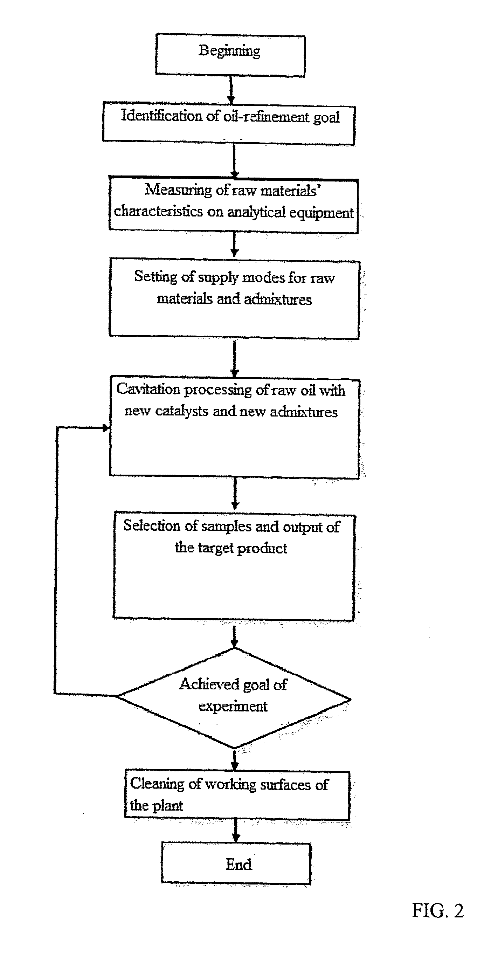

Fig. 2 depicts an algorithm of actions that leads to realization of the goal by identifying the area of optimum working modes of the device after defining of the specific goal for solving the task of oil-refining. The goal of such works is either to increase the oil-refining depth, either to increase the output of certain hydrocarbons, either to remove unwanted substances from the products of oil-refinement, either "enricht" certain types of fuels or to synthesize new substances of the set types of hydrocarbons. In order to achieve the goal one has to look for optimum performance modes of the device. First step is to carry out detailed measurements of physico-chemical characteristics with the help of analytical equipment. The generated data is then recorded. Next step is to make settings on the management equipment of the device, which will shape the algorithm for achieving the goal. First, the settings are made on the type of a catalyst, performance of the pump, pressure in the line of supply of gaseous or liquid hydrogen-bearing admixtures, power and frequency characteristics of the acoustic system, modes for mixing the raw materials and hydrogen-bearing admixtures. One sets the new types of catalyst and admixtures and also time rhythm of performance of the device. One sustains the values of settings during performance of cavitation processing of raw hydrocarbons. During work one selects the samples and conducts the analysis. Then one compares the results and forms the criteria for achieving the goal. Upon achieving the goal the work of the device is stopped or has new modes of work are set of it and performance of the device is continued with corrected modes. After finishing the works the working surfaces of the device are cleaned by pumping of dissolvers through the device.

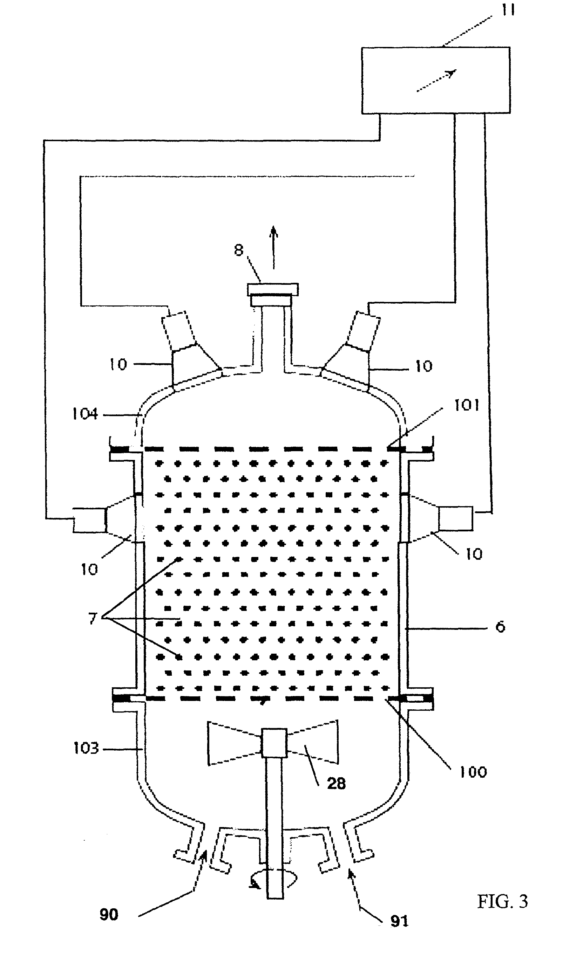

The claimed device (fig. 3-5) has a thermo-isolated casing (reactor) 6 built with the possibility to run a cavitation process (stream) of raw hydrocarbons organized in it 90, ultrasonic radiators 10 installed in the cavity of the reactor 6, a vertical mixer (rotary mixer) 28 for providing hydrodynamics of pseudo- liquefied layer of the flow of the catalyst 7 inside the reactor 6, a device 90 for supplying raw hydrocarbons 2 to the cracking reaction zone, a device 9 for selection and extraction of target product from the reactor. The claimed device (fig. 3-5) is also equipped (provided) with the granulated catalyst 7, located in the container 71 in the upper part of the reactor 6, in the zone of a cavitation flow (stream) of raw hydrocarbons 90, in the pseudo-liquid flow of the catalyst. Aside from that, the claimed device is equipped with the device 46, 47 for changing (regulating) rotation speed of the vertical mixer (rotary mixer) 28 and the speed of the pump 3, including also the devices 91 installed in the lower part of the reactor 6 intended for supplying hydrogen-bearing substances and 5 - for mixing raw hydrocarbons 90 with hydrogen-bearing substances 91.

Aside from that, the casing of the claimed device is constructed as a vertically installed prolonged cylinder 6 and is equipped with two end covers 103 and 104, installed in the casing 6 with the possibility of providing vacuum density (air tightness). The upper end cover 104 has holes in which the acoustic ultrasonic radiators 10 are installed and the lower end cover 103 has holes for installing the device 5 responsible for supply of raw hydrocarbons, hydrogen-bearing substances 91 and devices 5 for mixing raw hydrocarbons 90 and hydrogen-bearing substances 91.

The claimed device (fig. 1-5) contains a container 91 constructed in the form of a basket with perforation holes and placed in the upper part of the reactor in the cavitation flow (stream) and for the catalyst 7 the substance is used, which is chosen from an intermetallic mixture that includes particles of nickel, palladium and other metals possessing higher chemisorptive traits.

The casing of the reactor 6 of the claimed device for ultrasonic cracking is constructed from a non-magnetic metal in order to prevent adhesion of granules of the catalyst 71 to the walls of the reactor 6, which substantially decreases the effective surface of the catalyst that takes part in the cracking reaction. The casing 6 is made mostly out of non-magnetic metal chosen from non-magnetic stainless and acid-resistant steel, aluminium, chrome, nickel, copper and titanium alloys and special kinds of duralumin.

The claimed device has the acoustic ultrasonic radiators 10 created as piezostrictive, magnetoelectric, magnetostrictive radiators with the possibility of creating vertically directed standing acoustic field inside the reactor 6 with frequency-energetic characteristics that ensure the generation of cavitation flow (stream) of raw hydrocarbons 2, mixed with the pseudo-liquefied layer of the granulated catalyst 71 and gaseous-liquid hydrogen-bearing admixtures with the possibility to receive from them (or on their basis) (at least for a short while) the atomic hydrogen or hydride ions for binding (stabilization) the free radicals generated during cracking and thus preventing the recombination of molecules, which leads to the prevention of uncontrollable destruction of molecules of raw materials during cracking.

The substance used in the claimed device as hydrogen-bearing substance chosen from molecular hydrogen ($H_2$), gases of methane line (methane, ethane, propane, butane, and octane) and other hydrogen gases, liquids and dissolved solids that contain hydrogen.

Ultrasonic radiators 10 are installed in the casing 6 with the possibility of axial pistonwise transportation while providing vacuum density (air tightness) for the inner space of the reactor 6.

The claimed device contains a device for supplying raw hydrocarbons 90 built as a vessel 1, a filter 2, a pump 3, a reverse valve 4 provided with an electric engine 17, which is equipped with frequency converter, while the device for supplying hydrogen-bearing substances or gaseous admixtures is provided with a vessel 23 containing pressed gas, a gas pressure reducer 24, a gas meter 25, a device 27 as a reverse valve and a device 5 for mixing hydrogen raw substances 90 and admixtures 91 constructed as a diffuser.

The device 46 for changing (regulating) rotation speed of the vertical mixer (rotary mixer 28) is built as a frequency converter with the possibility to change the rotation speed in such a way that allows to change the level of raw hydrocarbons 90 and hydrogen-bearing admixture 91 from the lower to the upper level of cavitation zone in the flow (stream) of pseudo-liquefied layer 7 of the catalyst 71.

The claimed device contains a device 34 intended for selection and extraction of target product, which is constructed as a sectioned rectification column the entrance of which is connected to a drain tube of the intermediate vessel of the device 29 while the column has at least three sections and evaporation of raw hydrocarbons in the column after being processed by an acoustic field is performed by means of energy from the SHF-generator 36 installed in the lower part of the column 34.

The claimed device (figs. 3-5) is also equipped (provided) with the heaters 30 and 31 located in the casing of the intermediate vessel 29 and intended for heating raw hydrocarbons 90 and hydrogen-bearing admixtures 91.

The device (reactor) is equipped (provided) with two mesh filters 100 and 101 installed the following way: the first one in the upper part of the reactor 6 between the vessel 6 with the catalyst 71 and acoustic ultrasonic radiators 10, the second one in the lower part of the device (reactor) between the entrance to the reactor and its central part with the possibility to prevent pollution of the catalyst (in the container). The claimed device works the following way.

Work of the device

Cavitation processing of liquid consisting of hydrocarbon mixture is performed with the help of device in the following hydrodynamic modes:

Linear mode. Characterized by raw hydrocarbons going through a one-time cavitation processing. The raw hydrocarbons go through the device (through the cavity of the reactor) to be evacuated afterwards. Depending on the goal chosen for solving an oil-refinement task, for example, in an experiment or during processing of a selected amount of raw hydrocarbons, one makes a decision about the type of catalyst to use. After this the basket 71 is loaded with the necessary amount of the catalyst 7, on the lower end cover (filter) 100. Meanwhile, the vessel 1 that contains initial raw hydrocarbons has these raw hydrocarbons pumped out by using the pump 3 with a set expenditure formed by the frequency converter, and then through an open valve they are supplied through the reverse valve 4 to the mixing device 5. Synchronously with that the gas from the gas bottle with the admixture 23 is supplied through the gas pressure reducer 24 and one measures the passing amount of gas by using the gas meter 25. The gas expenditure is stabilized by the pneumatic throttle valve 24a and is supplied over the reverse valve 27 to the mixing device 5. By using the electric engine 17 and its multi-blade rotary mixer 28 one conducts the mixing of gaseous-liquid mix with particles of the intermetallic catalyst until a vortex pseudo-liquefied layer of the catalyst 71 is generated in the basket of the reactor. Gaseous-liquid mixture, generated as a result of a blending, is supplied to the cavity of the reactor 6 where it passes through the basket 7 with the pseudo-liquefied layer of the catalyst 71. Vortex field of the pseudo-liquefied layer of the catalyst along with the acoustic field from the system of radiators 10 forms a developed cavitation flow of gaseous-liquid mixture in the reactor 6 and that flow has the essence of raw hydrocarbons changed in it. During cavitation processing of raw hydrocarbons the gaseous-liquid mixture experiences changes of thermodynamic parameters, which are continuously measured by sensors 14, 15, and 16. The sensors 14 and 15 trace and record any excessive pressure in the reactor and sensor 16 traces and records the temperature in the reactor. The selection of products from the reactor 6 is performed by opening the vent 12 into the measuring cylinder 13. During the cavitation transformation of raw materials the flow of the target product is formed in the upper part of the reactor 6, which then is transferred through the nozzle 8 and over the manifold 9 into the hermetic vessel (intermediate vessel) 29. From the vessel 29 the excessive gas, generated due to cavitation processing of raw hydrocarbons, is measured by the gas meter 22 and after that it is released from the device. Upon exiting the device has a necessary amount of gas taken from it, which is subjected to analytic examination. The work of the device is finished by closing the gas pressure reducer 24 and shutting down the devices 11, 46 and 47. After the device finishes its work, one opens the valves 18 and 5a and pours the leftovers of raw hydrocarbons from the reactor into the vessel 21.

**Bypass.** The mode that is characterized by subjecting raw hydrocarbons to repeated cavitation processing with changeable thermodynamic parameters. Thermodynamic parameters of raw materials and especially their temperature is set by the electrical heaters 30 and 31, which are located in the cavity of the hermetic intermediate vessel 29. Electrical heaters 30 and 31 stabilize the sustenance of the set temperature by using two electronic systems (not illustrated). Depending on the chosen goal for solving the oil-refinement task, for example, in an experiment of choosing optimum modes of refining raw hydrocarbons with the maximum output of light distilled fractions, one makes a decision about the type of the catalyst to be used. After that the basket 7 gets loaded with its necessary amount. The raw materials are extracted from the vessel 29 by closing the valves 18 and 20. Whereas the pump 3 with a set expenditure formed by the frequency converter 47 is used to extract them from the vessel 29 and then to send them over the open valve 18a and reverse valve 4 to the mixing device 5. Synchronously with that the gas from the gas bottle with the admixture 23 is supplied through the gas pressure reducer 24 and one measures and records the passing amount of gas by using the gas meter 25. The gas expenditure is stabilized by the pneumatic throttle valve 24a and supplied over the reverse valve 27 to the mixing device 5. By using the electric engine of the rotary mixer 17 one conducts the mixing of gaseous-liquid mix with particles of the intermetallic catalyst by generating vortex pseudo-liquefied layer of the catalyst in the reactor with help of blades of the mixer 28. Gaseous-liquid mixture generated as a result of blending is supplied to the cavity of the reactor 6 where it passes through the basket 7 with a pseudo-liquid layer of the catalyst 71. Vortex field of the pseudo-liquid layer of the catalyst along with the acoustic field from the system of radiators 10 forms a developed cavitation flow of gaseous-liquid mixture in the reactor 6 and this flow has the contents of raw hydrocarbons changed in it. During the cavitation processing of raw hydrocarbons one traces and records the changes of thermodynamic parameters of gaseous-liquid mixture by using sensors 14, 15 and 16. During execution of cavitation processing of raw materials one creates the flow of the target product in the upper part of the reactor 6 that passes over the nozzle 8 and manifold 9 to the hermetic vessel (container) 29. From the vessel 29 the excessive gas generated due to cavitation processing of raw hydrocarbons is measured by the sensor 22 and is afterwards released from the device. Upon exiting the device one has a necessary amount of gas taken from it and subjected to analytic examination. The work of the device is finished by closing the gas pressure reducer 24, shutting down the cavity system 10 and turning off the frequency transformers 46 and 47. After this one closes the valve 19 and opens the valve 5a and the raw hydrocarbons left in the reactor flow into the vessel 21. For insignificant amounts that do not exceed 10-15 litres of refined raw hydrocarbons one uses atmospheric distillation with the help of the column 34. The raw materials processed in bypass mode are stored in the hermetic vessel 29. By opening the valve 33 the raw materials are supplied to the entrance of the atmospheric distillation column 34. Then one turns on the device for controlling 36 modes of SHF-heating of atmospheric distillation column. When the raw materials are subjected to intensive SHF-heating the vapour and undergo the cycle of atmospheric distillation inside several bubble-cup trays in the cavity of the column 34. The mixture of hydrocarbons breaks into several distillate fractions that are generated by their precipitation temperature, and they exit from the column through the holes to the corresponding freezers 37, 38 and 39. The work of the device is finished by closing the gas pressure reducer 24 and shutting down the devices 11, 46, 47 and 36. After the device finishes its performance one opens the valves 18, 5a, 18a, and pours the leftovers of raw materials into the vessel 21.

**Conservative mode.** This mode is characterized by having raw hydrocarbons pumped into the cavity of the reactor until the reactor 6 is full. The reactor 6 has the necessary amount of gas pumped into it in order to afterwards carry the experiment of changing physico-chemical characteristics of raw hydrocarbons. The gaseous hydrogen-bearing admixture is supplied through the gas pressure reducer 24, pneumatic throttle valve 24a and then one increases the pressure up to the set value, which is then recorded by the manometer 26, then one closes the gas pressure reducer 24, entrance valve 48 and 9 and turns off the electric engine of the rotary mixer 17 (blender) by using the frequency transformer 47 and turns on the acoustic system 10 and 11. In this particular mode one sustains the gaseous-liquid mixture for a set time and afterwards shuts down the acoustic system 10 and 11, including the acoustic system of the rotary mixer 17 (blender) by turning off the frequency converter 47. The liquid hydrocarbons in the reactor 6 that underwent changes due to experiencing cavitation processing, are poured into the vessel 21 by opening the valves 48, 18a, 5a and 18. The processed raw materials are extracted from the reactor 6 and subjected to analyses. The work of the device is completed by closing the gas pressure reducer 24, shutting down the cavitation system 10 and turning off the frequency converters 46 and 47. After that one closes the valve 19 and opens the valves 5a and 18 and the raw materials remaining in the reactor are poured into the vessel 21.

The granulated catalyst 7, prepared in advance and made of spherical particles with a diameter close being close to the diameter of cavitation bubbles, is loaded into the vessel 71, which is installed in the hydro-isolated casing of the reactor 6. The vessel 71 in built as a basket with the lower filter 100 and upper filter 101, which represent a net, have perforation holes and placed in the upper part of the reactor 6 in the cavitation flow (stream), and for the catalyst 7 one uses a substance chosen from inter-metallic mixture that includes particles of nickel, palladium and other metals and oxides of metals possessing high chemisorptive traits. Then, previously heated up to the working temperature of 50-80 °C, the raw hydrocarbons 90 the chemical contents and characteristics of which are previously defined by control-measuring means (not illustrated here) supply heat to the hydro-isolated framework 6 and fill it completely under working pressure P = 0,001 - 01 mPa, so that frontal surfaces of the radiators 100, 101 were moistened by liquid hydrocarbon raw materials. Then through the device 91 one supplies hydrogen-bearing substances to the casing 6, such as gases that are mixed with raw materials 91 using the mixer 5. This is followed by turning on the electric heaters 30 and 31 for sustaining the working temperature of the mixture subjected to processing, turning on ultrasonic radiators 10 and creating a cavitation stream in the processed mixture. Then one performs cavitation processing of the raw materials under the lower filter 101 of the vessel with the catalyst, which is then supplied to the outlet nozzle 9 of the device.

Due to cavitation processing of the hydrocarbon mixture the long molecules of raw hydrocarbons 90 boil and turn into steam, whereas hydrogen-bearing admixtures break into shorter fragments with generation of ions of atomic hydrogen and hydride-ions on the surface of the catalyst. Meanwhile the hydride-ions immediately generate free ions of atomic hydrogen on the surface of particles of the catalyst or create active alkene radicals. The ions of atomic hydrogen or ions of alkene radicals stabilize free bonds of fragments of broken long molecules of raw hydrocarbons 90 with generation of firm, shorter, lighter molecules with big octane number, containing less sulphur and other changes of chemical contents, structure and properties.

Due to occurrence of such changes in the cavitation zone of the reactor the claimed device provides substantial increase of oil-refinement depth and efficiency of raw hydrocarbons transformation by increasing the output of suitable ones. Aside from that the claimed device provides desulphurization and increases the octane number of fuels and cetane number of diesel fuels in processed raw materials.

Information sources taken into account

1. **S. D. Shestakov. Cavitation reactor. -** In patent RU № 2078112 and international publication WO 2007/1120067 A1, BO1Y 19/10, B01F 11/02, 25.10.2007 [1].

2. **R. N. Kamalov. Method for cracking organic compounds in liquid and gaseous environments and the device for its execution.** - In patent RU № 215116, 2151165, C10G 15/02, B01Y 19/10, B01 19/10, 22.03.1999 [2].

3. R. E. Rodionov, E. F. Venger. A device for cracking oil and oil products. - In Ukrainian patent UA № 41576, C10G 15/00, 26.07.2000 [3].

4. Harald Berger et al. Reactor for performing chemical reactions. - In US patent № 5,484,573, 16.01.1996, B06B 1/00, C08F 3/00, B01F 11/00 (PROTOTYPE) [4].

**Claims**

1.  Device for ultrasonic cracking of hydrocarbon compound (raw hydrocarbons) comprising:

    the casing built with the possibility to run cavitation process in raw hydrocarbons, acoustic ultrasonic radiators in the cavity of the reactor,
    vertical mixer (rotary mixer) for providing hydrodynamics pseudo-liquidized layer of the flow inside the reactor, device for supplying raw hydrocarbons to the reaction zone, device for selection and extraction of the target product **characterized by** being additionally equipped (provided with) a vessel for a catalyst, a catalyst placed in the vessel in the upper part of the reactor in the zone of cavitation flow (stream) in pseudo-liquid vortex flow of the catalyst and also devices for changing (regulating) rotation speed of the mixer (rotary mixer), with the mixer being installed in the lower part of the reactor, devices for supplying hydrogen-bearing substances and mixing them with raw hydrocarbons while the casing is built as a vertical prolonged cylinder (H>D) and is equipped with tow end covers installed (in the framework) with the possibility to provide vacuum density (air tightness), while the upper end cover is built with holes for installation acoustic ultrasonic radiators in them, and the lower one - for installation of devices for supplying raw hydrocarbons, hydrogen-bearing substances and their mixing.

2.  The device of claim 1 **characterized by** the vessel for catalyst with perforated upper and lower covers being built as a basket, the upper bottom of which has perforation holes and is located in the upper part of the reactor, whereas the lower bottom has perforation holes and is located in the lower part of the reactor, the casing of the reactor serves as walls, the substance to be used as a catalyst is chosen from the line consisting from granules made out of intermetallic mixture that includes particles of nickel, palladium, platinum and other metals and non-metals possessing chemisorptive traits, their combinations.

3.  The device of claim 2 **characterized by** the granules of the catalyst having a typical size 160-200 $\mu$m and the basket of the catalyst has perforation holes with the typical size 120-160 $\mu$m, while the basket is built in the form of a cylinder wherein side walls of the reactor are used as its own walls, and for the upper and lower bases - at least 2 (two) meshed filters with the typical size of perforation holes 120-160 $\mu$m, while the filters are attached to the side walls of the reactor with their side surfaces.

4.  The device of claim 2 **characterized by** the casing being built from non-magnetic metal chosen from non-magnetic stainless and acid-resistant steel, aluminium, chrome, nickel, brass alloys and special types of duralumin.

5.  The device of claim 1 **characterized by** the acoustic ultrasonic radiators being built as piezoelectric, magnetostrictive, piezostrictive radiators with the possibility of creating vertically directed standing acoustic field with frequency-energetic characteristics that ensure the generation of cavitation flow (stream) in the pseudo-liquefied layer of raw materials, mixed with a granulated catalyst and gaseous-liquid water-bearing admixtures with the possibility to receive from them (or on its basis) (at least for a short while) the atomic hydrogen or hydride ions for binding (stabilization) the free radicals generated during cracking and thus preventing the recombination of molecules, which leads to prevention of uncontrollable destruction of molecule of raw materials during cracking.

6.  The device of claim 1 **characterized by** the hydrogen-bearing substance being selected from molecular hydrogen ($H_2$), gases of methane line (methane ($CH_4$), ethane ($C_2H_6$), propane ($C_3H_8$), butane ($C_4H_{10}$) and other hydrogen gases, liquids and dissolved solids that contain hydrocarbons.

7.  The device of claim 1 **characterized by** the ultrasonic radiators being installed in the casing with the possibility of axial pistonwise transportation while providing vacuum density (hermeticity) of the inner space of the reactor.

8.  The device of claim 1 is **characterized by** the device for supplying raw hydrocarbons being built as a pump with an electric engine and the device for supplying hydrogen-bearing substance - as a gas-liquid mixer.

9. The device of claim 1 is **characterized by** the device for mixing hydrocarbon-bearing raw materials with hydrogen-bearing substance being built as a diffuser.

10. The device of claim 1 **characterized by** the device for changing (regulating) rotation speed of the vertical mixer (rotary mixer) being built as a vertical shaft, the upper part of which has a fixated multi-blade mixer with the possibility to change the speed of rotation and liquid raw attack angle in such a way that ensures the change of raw hydrocarbon level and hydrogen-bearing admixture level from the lower to the upper level of cavitation zone in the flow (stream) of pseudo-liquid layer of the catalyst.

11. The device of claim 1 **characterized by** the device for selection and extraction of target product being built as a sectioned rectification column the entrance of which is connected to a drain tube of the reactor of the device while the column has at least 3 sections and evaporation of processed raw hydrocarbons in the column is performed (provided) by means of SHF-generator installed in the lower part of the column.

12. The device of claim 1 **characterized by** additionally being equipped with the heaters of raw hydrocarbons located in the casing.

13. The device of claim 1 **characterized by** additionally being equipped with two mesh filters installed the following way: the first one - in the upper part of the reactor between the basket with a catalyst and acoustic ultrasonic radiators, the second one - in the lower part of the reactor between the entrance to the reactor and its central part with the possibility to prevent pollution of the catalyst (in the container).

FIG. 1

FIG. 2

FIG. 3

FIG. 4

FIG. 5

Europäisches
Patentamt

European
Patent Office

Office européen
des brevets

## EUROPEAN SEARCH REPORT

Application Number

EP 13 19 9924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 5 484 573 A (BERGER HARALD [DE] ET AL) 16 January 1996 (1996-01-16) * figure 1 * * the whole document * ----- | 1-13 | INV. C10G15/08 B01F7/00 B01J19/10 B06B1/00 |
| A | WO 02/068565 A1 (ABC ENERGY CO LTD [KR]; JUNG MUN YHUNG [KR]; KIM BYUNG KOOK [KR]) 6 September 2002 (2002-09-06) * figure 1 * ----- | 1-13 | |
| A | US 2006/254956 A1 (KHAN M R [SA] KHAN RASHID M [SA]) 16 November 2006 (2006-11-16) * figure 1 * * paragraph [0052] - paragraph [0055] * ----- | 1-13 | |
| A | US 2009/314487 A1 (MEDOFF MARSHALL [US]) 24 December 2009 (2009-12-24) * paragraph [0050] - paragraph [0073] * ----- | 1-13 | |
| A | US 2005/205463 A1 (GUNNERMAN RUDOLF W [US]) 22 September 2005 (2005-09-22) * paragraph [0005] - paragraph [0024] * ----- | 1-13 | TECHNICAL FIELDS SEARCHED (IPC) C10G B01F |
| A | WO 2006/067636 A2 (PEPTROCO MARKETING SA [CH]; ASPANDIYAROV BULAT [KZ]; KULMANOV MURAT; A) 29 June 2006 (2006-06-29) * the whole document * ----- | 1-13 | B01J B06B |

The present search report has been drawn up for all claims

| Place of search | Date of completion of the search | Examiner |
|---|---|---|
| The Hague | 24 March 2014 | Bernet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 9924

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2014

| Patent document cited in search report | | Publication date | Patent family member(s) | | Publication date |
|---|---|---|---|---|---|
| US 5484573 | A | 16-01-1996 | DE | 4228618 A1 | 03-03-1994 |
| | | | EP | 0584685 A2 | 02-03-1994 |
| | | | JP | H06190270 A | 12-07-1994 |
| | | | US | 5484573 A | 16-01-1996 |
| WO 02068565 | A1 | 06-09-2002 | NONE | | |
| US 2006254956 | A1 | 16-11-2006 | CN | 101213272 A | 02-07-2008 |
| | | | JP | 2008540773 A | 20-11-2008 |
| | | | US | 2006254956 A1 | 16-11-2006 |
| | | | WO | 2006122275 A2 | 16-11-2006 |
| US 2009314487 | A1 | 24-12-2009 | AR | 072191 A1 | 11-08-2010 |
| | | | AU | 2009260651 A1 | 23-12-2009 |
| | | | CA | 2722859 A1 | 23-12-2009 |
| | | | US | 2009314487 A1 | 24-12-2009 |
| | | | US | 2011265991 A1 | 03-11-2011 |
| | | | US | 2013153465 A1 | 20-06-2013 |
| | | | US | 2013312955 A1 | 28-11-2013 |
| | | | WO | 2009154876 A1 | 23-12-2009 |
| US 2005205463 | A1 | 22-09-2005 | AR | 050057 A1 | 27-09-2006 |
| | | | CA | 2559490 A1 | 06-10-2005 |
| | | | CN | 101124303 A | 13-02-2008 |
| | | | EP | 1733007 A2 | 20-12-2006 |
| | | | KR | 20060130742 A | 19-12-2006 |
| | | | RU | 2339676 C2 | 27-11-2008 |
| | | | US | 2005205463 A1 | 22-09-2005 |
| | | | WO | 2005091859 A2 | 06-10-2005 |
| WO 2006067636 | A2 | 29-06-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 20071120067 A1
- US 215116 A
- US 2151165 A
- US 41576 A
- US 5484573 A

- RU 2078112
- RU 215116
- RU 2151165
- UA 41576

### Non-patent literature cited in the description

- System identification. **LJUNG L.** Theory for the User. PTR Prentice Hall, 1990
- **YUDIN D. B.** Mathematical methods of control in conditions of insufficient information. *M. Sov. radio,* 1974, 400
- **EYKHOFF, PIETER.** System Identification - Parameter and System Estimation. john Wiley & Sons, 1974
- **SAGE ZH. P. ; WHITE CH. S.** Optimum system management. *M: Radio and communications,* 1982, 392
- **WIMPENNY, J. W. T.** The Validity of Models. *Adv Dent Res,* 1997, vol. 11 (1), 150-159

- **ADLER Y. P. ; MARKOVA V. V.** *Proc. 4-th Berkeley Symp. Mathematical Statistic and Probability,* 381-398
- **M.: NEDRA.** Adaptive algorithm for searching optimum parameters of complicated systems. 1976, 280
- **V MULTIUN.** Meetings on management. 1971, 1332-134
- **KRASOVSKIY G. I. ; FILARETOV G. F.** *Planning of the experiment,* 1982, 302
- **HEARTMAN K. ; LECKIY E. ; SHEFER V.** *Planning of the experiment in researching of technological processes - M.: Mir,* 1977, 552
- **HICKS CH. R.** *Basic principles of planning the experiment,* 1967